# EUROPEAN PATENT SPECIFICATION

(11) **EP 4 290 753 B1**
(45) Date of publication and mention of the grant of the patent: **29.07.2026**
(21) Application number: 21923775.7
(22) Date of filing: 05.02.2021
(51) Int. Cl.: B60L 53/10, B60L 53/22, H02J 1/102, H02J 1/108, H02J 7/02, H02M 1/00, H02M 3/00, H02M 3/158, H02M 3/28, H02M 3/335, H02M 7/487

(54) **CHARGING CIRCUIT AND CHARGING DEVICE**
LADESCHALTUNG UND LADEVORRICHTUNG
CIRCUIT DE CHARGE ET DISPOSITIF DE CHARGE

(43) Date of publication of application: 13.12.2023
(73) Proprietor: Huawei Digital Power Technologies Co., Ltd., Shenzhen, Guangdong 518043 (CN)
(72) Inventor: LIU, Yang, Shenzhen, Guangdong 518129 (CN); ZHU, Jixin, Shenzhen, Guangdong 518129 (CN); HU, Biao, Shenzhen, Guangdong 518129 (CN)
(74) Representative: Pfenning, Meinig & Partner mbB
(86) International application number: PCT/CN2021/075577
(87) International publication number: WO 2022/165759

(56) References cited:
- EP-A1- 3 333 009
- CN-A- 110 138 239
- CN-A- 111 032 423
- CN-A- 111 193 406
- CN-A- 111 211 553
- CN-A- 111 342 672
- CN-A- 111 342 672
- CN-U- 211 377 885
- US-A1- 2018 162 229
- LU YANGJUN ET AL: "Ultra-Wide Output Voltage Range Power Supply Based on Modular Switched-Converter Principle", IEEE TRANSACTIONS ON POWER ELECTRONICS, INSTITUTE OF ELECTRICAL AND ELECTRONICS ENGINEERS, USA, vol. 35, no. 1, 1 January 2020 (2020-01-01), pages 94 - 106, XP011751947, ISSN: 0885-8993, [retrieved on 20191021], DOI: 10.1109/TPEL.2019.2912724

## Description

### TECHNICAL FIELD

Embodiments of this application relate to the field of electronic circuit technologies, and in particular, to a charging circuit and a charging apparatus.

### BACKGROUND

Currently, different types of electric vehicles have different charging voltage ranges. For example, usually, a charging voltage range of a passenger vehicle is from 200 V to 500 V, and a charging voltage range of a bus is from 300 V to 750 V. A charging apparatus needs to meet both a fast charging requirement of the passenger vehicle and a fast charging requirement of the bus. The charging apparatus needs to meet wide range output (wide range output) because of different charging voltage ranges. In an energy industry standard NB/T 33001-2018 of the People's Republic of China, it is specified that the charging apparatus needs to have an anti-backflow function (for example, a diode is added to output end), to prevent a current of a storage battery from flowing back. Therefore, the charging apparatus further needs to meet an anti-backflow () requirement.

Because the charging apparatus needs to meet both the wide range output and the anti-backflow requirement, usually, a switch circuit may be used to control a conversion circuit to implement the wide range output, and an anti-backflow circuit is added to an output port to prevent the current of the storage battery from flowing back. In an existing solution, the wide range output and anti-backflow may be implemented. However, there are a large quantity of components in a circuit, and consequently, the charging apparatus has a large volume.

CN 111 342 672 A discloses a hybrid switch phase shift control anti-backflow charging device, and the charging device comprises a first direct current module and a second direct current module, wherein a hybrid switch is connected between the positive electrode end of the second DC module and the negative electrode end of the first DC module, and the positive electrode end of the first DC module and the negative electrode end of the second DC module serve as output ends.

CN 111 211 553 A discloses a double-direct-current power supply series-parallel connection switching circuit, which comprises a direct-current power supply A, a direct-current power supply B, a diode D1, a diode D2 and a switch K1. A controller is used to control the opening and closing of the switch K1 according to the read VA, IA, VB, IB, V charge and I charge.

### SUMMARY

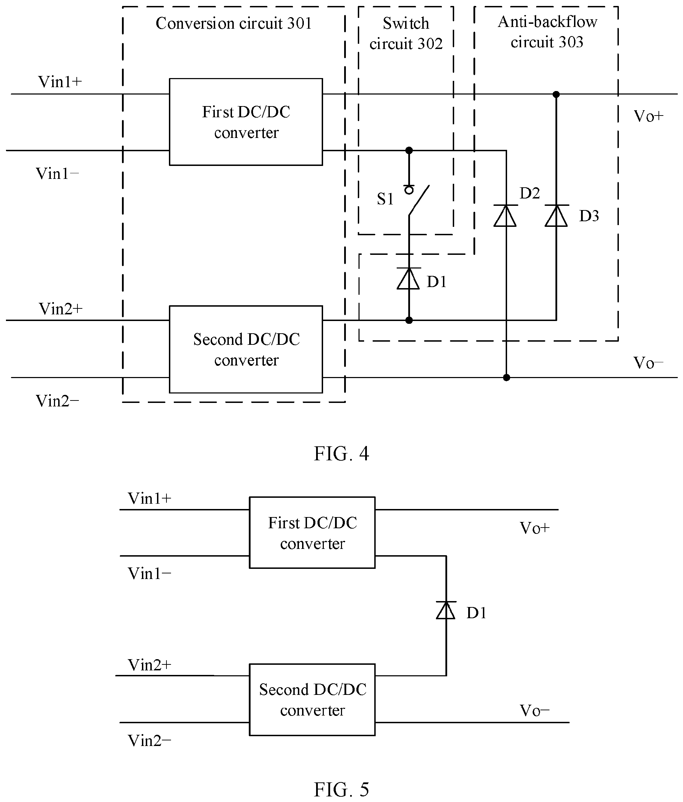

The present invention is set out in the appended set of claims. Embodiments of this application provide a charging circuit and a charging apparatus, to reduce a volume of the charging apparatus. The embodiments corresponding to figures 4 - 7 do not form part of the invention, and are used for illustration purpose.

A first aspect provides a charging circuit (charging circuit). The charging circuit may include at least two groups of direct current (direct current, DC)/DC converters, at least one group of relay switches, and at least one diode that are mutually coupled. The relay switch is configured to connect the at least two groups of DC/DC converters in series when a first voltage is in a first threshold range. The first voltage is a charging voltage of an electric vehicle. The relay switch is further configured to connect the at least two groups of DC/DC converters in parallel when the first voltage is in a second threshold range. The diode is configured to prevent a current of a storage battery in the electric vehicle from flowing back.

In the solution provided in this application, the DC/DC converter may convert a first direct current into a second direct current, and the second direct current is configured to supply power to the storage battery in the electric vehicle. For electric vehicles with different charging voltage ranges, the at least two groups of DC/DC converters implement wide range voltage output by using the relay switch, to meet charging requirements of different electric vehicles. In addition, the diode may be used to prevent the current of the storage battery in the electric vehicle from flowing back. Different from the conventional technology in which there are a large quantity of components in a charging circuit, and consequently, a charging apparatus has a large volume, in the technical solution in this application, a small quantity of components are used for the charging circuit, to meet wide voltage output and an anti-backflow requirement of the charging circuit, to reduce a volume of the charging apparatus, improve power density of a charging apparatus product, and reduce costs of the charging apparatus.

In a possible implementation, when the charging circuit includes two groups of DC/DC converters and one group of relay switches, the charging circuit includes a first DC/DC converter, a second DC/DC converter, a first relay switch, a first diode, a second diode, and a third diode. A cathode of the first diode is coupled to a first output end of the first DC/DC converter by using the first relay switch, a anode of the first diode is coupled to a first output end of the second DC/DC converter, a cathode of the second diode is coupled to the first output end of the first DC/DC converter, a anode of the second diode is coupled to a second output end of the second DC/DC converter, a cathode of the third diode is coupled to a second output end of the first DC/DC converter, a anode of the third diode is coupled to the first output end of the second DC/DC converter, the second output end of the first DC/DC converter is a first output end of the charging circuit, and the second output end of the second DC/DC converter is a second output end of the charging circuit.

In the solution provided in this application, the charging circuit may include at least two groups of DC/DC converters, at least one group of relay switches, and at least one diode. When the charging circuit includes two groups of DC/DC converters and one group of relay switches, a possible connection manner may be connecting the two groups of DC/DC converters, the one group of relay switches, and three diodes. In this way, wide voltage output and an anti-backflow requirement can be met by using only one group of relay switches, to reduce a volume of a charging apparatus.

In the invention, the charging circuit further includes a control circuit. The control circuit is configured to: when the first voltage is in the first threshold range, control the first relay switch to connect the first DC/DC converter and the second DC/DC converter in series, and when the first voltage is in the second threshold range, control the first relay switch to connect the first DC/DC converter and the second DC/DC converter in parallel.

In the solution provided in this application, when the electric vehicle needs to be charged, the control circuit identifies a charging voltage range of the electric vehicle through communication, and controls closing or opening of the first relay switch based on the identified charging voltage range of the electric vehicle, so that the first DC/DC converter and the second DC/DC converter are connected in series or in parallel, to output voltages in different ranges.

In an implementation, when the charging circuit includes two groups of DC/DC converters and two groups of relay switches, the charging circuit includes a first DC/DC converter, a second DC/DC converter, a first relay switch, a second relay switch, a first diode, a second diode, and a third diode. A cathode of the first diode is coupled to a first output end of the first DC/DC converter, a anode of the first diode is coupled to a first output end of the second DC/DC converter, a cathode of the second diode is coupled to the first output end of the first DC/DC converter by using the first relay switch, a anode of the second diode is coupled to a second output end of the second DC/DC converter, a cathode of the third diode is coupled to a second output end of the first DC/DC converter by using the second relay switch, a anode of the third diode is coupled to the first output end of the second DC/DC converter, the second output end of the first DC/DC converter is a first output end of the charging circuit, and the second output end of the second DC/DC converter is a second output end of the charging circuit. The first relay switch and the second relay switch are open, so that the first DC/DC converter and the second DC/DC converter are connected in series; and the first relay switch and the second relay switch are closed, so that the first DC/DC converter and the second DC/DC converter are connected in parallel.

In the solution provided in this application, the charging circuit may include at least two groups of DC/DC converters, at least one group of relay switches, and at least one diode. When the charging circuit includes two groups of DC/DC converters and two groups of relay switches, a possible connection manner may be connecting the two groups of DC/DC converters, the two groups of relay switches, and three diodes. In this way, wide voltage output and an anti-backflow requirement can be met by using only two groups of relay switches, to reduce a volume of a charging apparatus.

In a possible implementation, the charging circuit further includes a control circuit. The control circuit is configured to: when the first voltage is in the first threshold range, control the first relay switch and the second relay switch to connect the first DC/DC converter and the second DC/DC converter in series, and when the first voltage is in the second threshold range, control the first relay switch and the second relay switch to connect the first DC/DC converter and the second DC/DC converter in parallel.

In the solution provided in this application, when the electric vehicle needs to be charged, the control circuit may identify a charging voltage range of the electric vehicle through communication, and control closing or opening of the first relay switch and the second relay switch based on the identified charging voltage range of the electric vehicle, so that the first DC/DC converter and the second DC/DC converter are connected in series or in parallel, to output voltages in different ranges.

In a possible implementation, when the first relay switch is an alternating current relay switch, the charging circuit further includes a first semiconductor device. The first relay switch is coupled to the first semiconductor device in parallel; and the first semiconductor device is configured to protect the first relay switch.

In the solution provided in this application, when the charging circuit includes one group of relay switches, the first relay switch may be an alternating current relay switch. Because the alternating current relay switch has a small volume and low costs, a volume of a charging apparatus can be reduced, and costs of the charging apparatus can also be reduced. However, a single-point fault occurs when a direct current flows through the alternating current relay switch. Therefore, a semiconductor device needs to be coupled to the first relay switch in parallel. The semiconductor device may protect the first relay switch, to prevent the first relay switch from generating an arc and being damaged.

In a possible implementation, when the first relay switch is an alternating current relay switch and the second relay switch is an alternating current relay switch, the charging circuit further includes a first semiconductor device and a second semiconductor device. The first relay switch and the second relay switch are respectively coupled to the first semiconductor device and the second semiconductor device in parallel. The first semiconductor device is configured to protect the first relay switch; and the second semiconductor device is configured to protect the second relay switch.

In the solution provided in this application, when the charging circuit includes two groups of relay switches, the first relay switch may be an alternating current relay switch, and the second relay switch may be an alternating current relay switch. Because the alternating current relay switch has a small volume and low costs, a volume of a charging apparatus can be reduced, and costs of the charging apparatus can also be reduced. However, a single-point fault occurs when a direct current flows through the alternating current relay switch. Therefore, a semiconductor device needs to be coupled to the first relay switch in parallel, and a semiconductor device needs to be coupled to the second relay switch in parallel. The semiconductor device may protect the relay switch, to prevent the relay switch from generating an arc and being damaged.

In a possible implementation, the first semiconductor device is any one of an insulated gate bipolar transistor (insulated gate bipolar transistor, IGBT), a metal-oxide-semiconductor field-effect transistor (metal-oxide-semiconductor field-effect transistor, MOSFET), and a silicon controlled rectifier (silicon controlled rectifier, SCR).

In a possible implementation, the second semiconductor device is any one of an IGBT, a MOSFET, and an SCR.

In a possible implementation, a circuit structure of each of the first DC/DC converter and the second DC/DC converter is any one of the following types: a full-bridge inductor-inductor-capacitor (inductor-inductor-capacitor, LLC) resonant circuit, a half-bridge LLC resonant circuit, a three-level LLC resonant circuit, a three-level full-bridge circuit, a phase-shift full-bridge circuit, an asymmetric half-bridge circuit, and a three-phase interleaved LLC resonant circuit.

A second aspect provides a charging apparatus. The charging apparatus may include the charging circuit provided in the first aspect and any implementation of the first aspect.

### BRIEF DESCRIPTION OF DRAWINGS

FIG. 1 is a schematic diagram of an application scenario according to an embodiment of this application;
FIG. 2 is a schematic diagram of a charging voltage of a charging station of an electric vehicle in the conventional technology;
FIG. 3 is a schematic diagram of a structure of a charging circuit according to an embodiment of this application;
FIG. 4 is a schematic diagram of a structure of another charging circuit according to an embodiment of this application;
FIG. 5 is a schematic diagram of a structure of still another charging circuit according to an embodiment of this application;
FIG. 6 is a schematic diagram of a structure of yet another charging circuit according to an embodiment of this application;
FIG. 7 is a schematic diagram of a structure of still yet another charging circuit according to an embodiment of this application;
FIG. 8 is a schematic diagram of a structure of a further charging circuit according to an embodiment of this application;
FIG. 9 is a schematic diagram of a structure of a charging circuit according to the invention;
FIG. 10 is a schematic diagram of a structure of a yet further charging circuit according to an embodiment of this application;
FIG. 11 to FIG. 17 are schematic diagrams of structures of several DC/DC converters according to an embodiment of this application; and
FIG. 18 is a schematic diagram of a charging apparatus according to an embodiment of this application.

### DESCRIPTION OF EMBODIMENTS

Embodiments of this application provide a charging circuit and a charging apparatus, to reduce a volume of the charging apparatus. The following describes in detail the technical solutions in embodiments of this application with reference to the accompanying drawings in embodiments of this application. It is clearly that the described embodiments are merely some but not all of embodiments of this application.

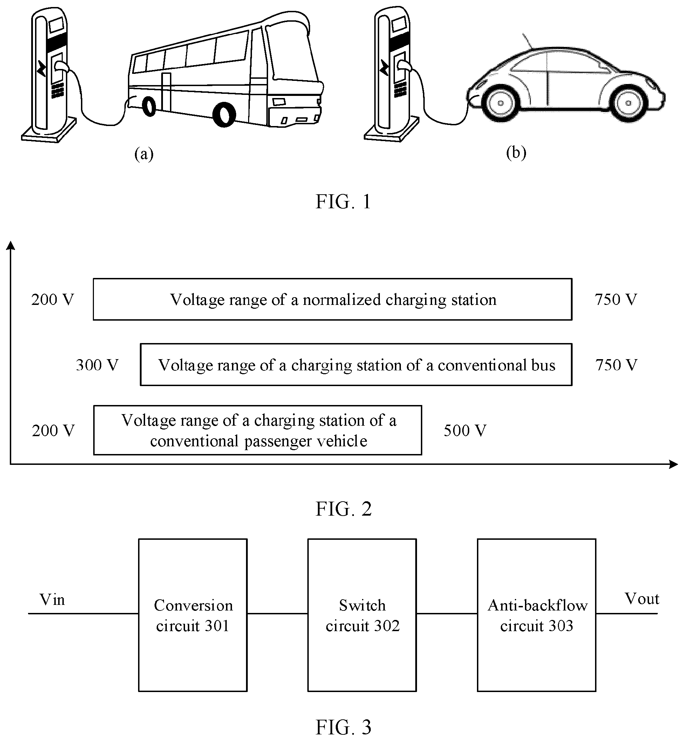

To better understand the charging circuit and the charging apparatus provided in embodiments of this application, the following first describes an application scenario of embodiments of this application. FIG. 1 is a schematic diagram of an application scenario according to an embodiment of this application. As shown in FIG. 1, a conventional charging system includes a charging station of a passenger vehicle in (b) in FIG. 1 and a charging station of a bus in (a) in FIG. 1. Usually, a charging voltage range of the passenger vehicle is from 200 V to 500 V, and a charging voltage range of the bus is from 300 V to 750 V. In recent years, the charging system tends to develop towards a higher charging voltage. In this background, the charging apparatus may implement charging normalization. FIG. 2 is a schematic diagram of a charging voltage of a charging station of an electric vehicle in the conventional technology. As shown in FIG. 2, a normalized charging apparatus may meet a full range constant power requirement. To be specific, the normalized charging apparatus can meet both a fast charging requirement of the passenger vehicle and a fast charging requirement of the bus. Two typical constant power requirements are constant power output at an output voltage (from 250 V to 500 V) and constant power output at an output voltage (from 500 V to 1000 V).

To implement high-power fast charging of a direct current charging pile, all current mainstream charging pile device manufacturers in this industry connect a plurality of single-unit charging modules in parallel, to form a high-power charging cabinet. A typical total output power of charging piles that are connected in parallel is 60 kW, 90 kW, or 120 kW. If an output power of each module is 15 kW, there are respectively four/six/eight single-unit charging pile modules in the cabinet of the charging pile; or if an output power of each module is 30 kW, there are respectively two/three/four single-unit charging pile modules in the cabinet of the charging pile. In an energy industry standard NB/T 33001-2018 of the People's Republic of China, it is specified that the charging apparatus needs to have an anti-backflow function, to prevent a current of a storage battery from flowing back. To ensure that a plurality of modules that operate in parallel can operate reliably, especially in consideration of an anti-backflow requirement of output, an anti-backflow diode is usually added to output of the charging module.

In an existing solution, a charging circuit can meet a highly efficient wide voltage range and a reliable anti-backflow requirement. The charging circuit may include a conversion circuit, a switch circuit, and an anti-backflow circuit. In consideration of a wide range constant power requirement, to obtain high efficiency, the switch circuit is used to control the conversion circuit to implement wide range output. In consideration of the anti-backflow requirement, the anti-backflow circuit may be added to an output port of the charging circuit. In an existing solution, there are a large quantity of components in the circuit, and consequently, the charging apparatus has a large volume and high costs.

To resolve the foregoing problems, this application provides a charging circuit and a charging apparatus. The following describes the charging circuit in detail. FIG. 3 is a schematic diagram of a structure of a charging circuit according to an embodiment of this application. As shown in FIG. 3, the charging circuit may include a conversion circuit 301, a switch circuit 302, and an anti-backflow circuit 303. The switch circuit 302 is separately coupled to the conversion circuit 301 and the anti-backflow circuit 303. The switch circuit 302 is configured to control the conversion circuit 301 to implement wide range output, and the anti-backflow circuit 303 is configured to prevent a current from flowing back.

The conversion circuit 301 includes at least two groups of DC/DC converters that are mutually coupled. The at least two groups of DC/DC converters are configured to convert a first direct current into a second direct current. A voltage of the second direct current is a first voltage, and the charging circuit supplies power to a storage battery in an electric vehicle by using the second direct current. The DC/DC converter is a voltage converter that converts an input voltage and then effectively outputs a fixed voltage.

The switch circuit 302 includes at least one group of relay switches. The at least one group of relay switches is configured to connect the at least two groups of DC/DC converters in series when the first voltage is in a first threshold range. The first voltage is a charging voltage of the electric vehicle. The relay switch is further configured to connect the at least two groups of DC/DC converters in parallel when the first voltage is in a second threshold range.

The anti-backflow circuit 303 includes at least one diode. The at least one diode is configured to prevent a current of the storage battery in the electric vehicle from flowing back.

It can be understood that, in this embodiment of this application, one group of relay switches may be one relay switch, or may be a plurality of relay switches. The group of relay switches implement a same function, and are closed/open, to control a connection/disconnection of the circuit. Similarly, one group of DC/DC converters may be one DC/DC converter, or may be a plurality of DC/DC converters. The group of DC/DC converters implement a same function. This is not limited in this application.

FIG. 4 is a schematic diagram of a structure of another charging circuit according to an embodiment of this application. The charging circuit shown in FIG. 3 is optimized in FIG. 4. As shown in FIG. 4, the charging circuit includes a conversion circuit 301, a switch circuit 302, and an anti-backflow circuit 303. When the conversion circuit 301 includes two groups of DC/DC converters, and the switch circuit 302 includes one group of relay switches, specifically, the conversion circuit 301 includes a first DC/DC converter and a second DC/DC converter, the switch circuit 302 includes a first relay switch S1, and the anti-backflow circuit 303 includes a first diode D1, a second diode D2, and a third diode D3.

Input voltages of the first DC/DC converter and the second DC/DC converter may be a same voltage, or may be different voltages. A cathode of D1 is coupled to a first output end of the first DC/DC converter by using S1, a anode of D1 is coupled to a first output end of the second DC/DC converter, a cathode of D2 is coupled to the first output end of the first DC/DC converter, a anode of D2 is coupled to a second output end of the second DC/DC converter, a cathode of D3 is coupled to a second output end of the first DC/DC converter, a anode of D3 is coupled to the first output end of the second DC/DC converter, the second output end of the first DC/DC converter is a first output end of the charging circuit, and the second output end of the second DC/DC converter is a second output end of the charging circuit.

Specifically, FIG. 5 is a schematic diagram of a structure of still another charging circuit according to an embodiment of this application. As shown in FIG. 5, when S1 is closed, a first DC/DC converter and a second DC/DC converter are connected in series.

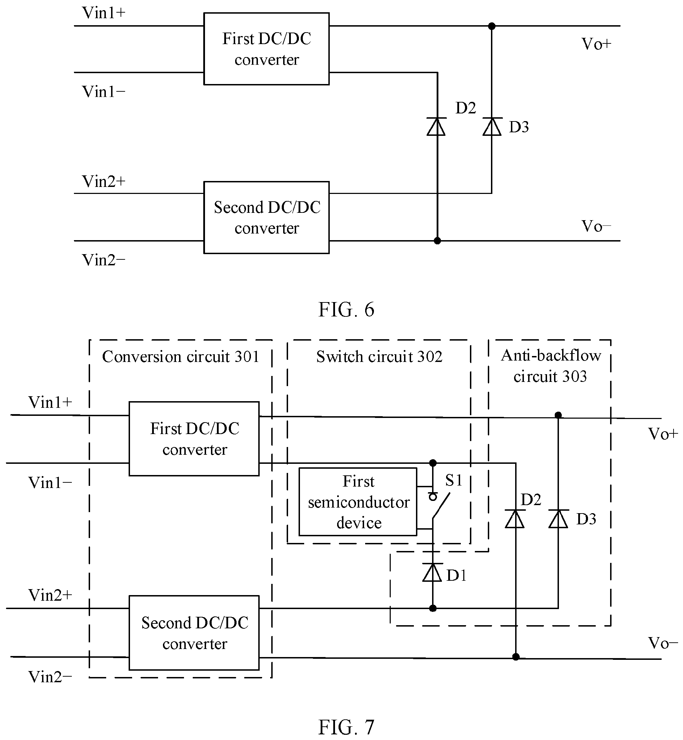

FIG. 6 is a schematic diagram of a structure of yet another charging circuit according to an embodiment of this application. As shown in FIG. 6, when S1 is open, a first DC/DC converter and a second DC/DC converter are connected in parallel.

Optionally, S1 may be an alternating current relay switch. FIG. 7 is a schematic diagram of a structure of still yet another charging circuit according to an embodiment of this application. The charging circuit shown in FIG. 4 is optimized in FIG. 7. As shown in FIG. 7, when S1 is an alternating current relay switch, a switch circuit 302 in the charging circuit may further include a first semiconductor device. S1 is coupled to the first semiconductor device in parallel, and the first semiconductor device is configured to protect S1. A single-point fault occurs because a direct current flows through an alternating current relay. Because the first semiconductor device is coupled to S1 in parallel, when S1 is open with a load, S1 may be prevented from generating an arc and being damaged. The arc may indicate a maximum capability of breaking a current at a limit by the relay switch.

Optionally, the first semiconductor device may be any one of an IGBT, a MOSFET, and an SCR.

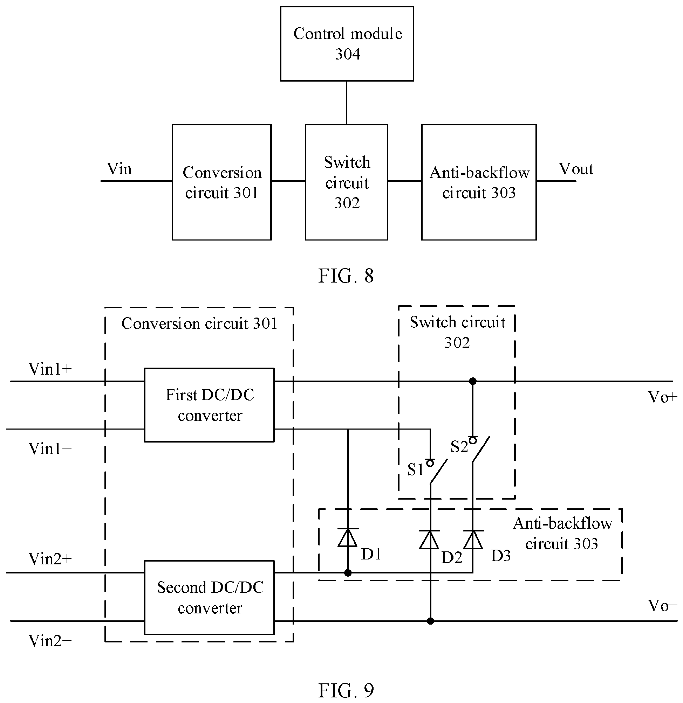

FIG. 8 is a schematic diagram of a structure of a further charging circuit according to an embodiment of this application. As shown in FIG. 8, based on the schematic diagram shown in FIG. 3, the charging circuit may further include a control circuit 304, and the control circuit 304 is coupled to a switch circuit 302.

In FIG. 4 to FIG. 7, the control circuit 304 is specifically coupled to S1.

The control circuit 304 is configured to: when a first voltage is in a first threshold range, control S1 to connect the first DC/DC converter and the second DC/DC converter in series, and when the first voltage is in a second threshold range, control S1 to connect the first DC/DC converter and the second DC/DC converter in parallel. For example, when an electric vehicle needs to be charged, the control circuit 304 may first detect or obtain a type of the electric vehicle and a required charging voltage range, and then deliver a signal or a driving signal to the switch circuit 302 based on the charging voltage range, to control the switch circuit 302 (control opening/closing of S1), to control a conversion circuit 301 (control the first DC/DC converter and the second DC/DC converter to be connected in series/parallel), and implement wide range output. The control circuit 304 may be a circuit that includes a micro control unit (micro controll unit, MCU) and a drive circuit. For example, the MCU delivers a signal to the drive circuit, and the drive circuit may drive opening/closing of S1.

For a detailed description of an optimization circuit corresponding to FIG. 8, refer to descriptions in FIG. 4 to FIG. 7. To avoid repetition, details are not described herein again. It can be understood that, in the charging circuits shown in FIG. 4 to FIG. 7, the conversion circuit 301 includes only two groups of DC/DC converters in an example. The conversion circuit 301 may further include a larger quantity of DC/DC converters. The conversion circuit implements a same function. A quantity of DC/DC converters in the conversion circuit 301 is not limited in this embodiment of this application. Similarly, in the charging circuits shown in FIG. 4 to FIG. 7, an anti-backflow circuit 303 includes only three diodes in an example. The anti-backflow circuit 303 may further include a larger quantity of diodes. The anti-backflow circuit implements a same function. A quantity of diodes in the anti-backflow circuit 303 is not limited in this embodiment of this application.

FIG. 9 is a schematic diagram of a structure of a charging circuit according to the invention. The charging circuit shown in FIG. 3 is optimized in FIG. 9. As shown in FIG. 9, the charging circuit includes a conversion circuit 301, a switch circuit 302, and an anti-backflow circuit 303. When the conversion circuit 301 includes two groups of DC/DC converters, and the switch circuit 302 includes two groups of relay switches, specifically, the conversion circuit 301 includes a first DC/DC converter and a second DC/DC converter, the switch circuit 302 includes a first relay switch S1 and a second relay switch S2, and the anti-backflow circuit 303 includes a first diode D1, a second diode D2, and a third diode D3.

Input voltages of the first DC/DC converter and the second DC/DC converter may be a same voltage, or may be different voltages. A cathode of D1 is coupled to a first output end of the first DC/DC converter, a anode of D1 is coupled to a first output end of the second DC/DC converter, a cathode of D2 is coupled to the first output end of the first DC/DC converter by using S1, a anode of D2 is coupled to a second output end of the second DC/DC converter, a cathode of D3 is coupled to a second output end of the first DC/DC converter by using S2, a anode of D3 is coupled to the first output end of the second DC/DC converter, the second output end of the first DC/DC converter is a first output end of the charging circuit, and the second output end of the second DC/DC converter is a second output end of the charging circuit.

Specifically, when both S1 and S2 are open, as shown in FIG. 5, the first DC/DC converter and the second DC/DC converter are connected in series; and when both S1 and S2 are closed, as shown in FIG. 6, the first DC/DC converter and the second DC/DC converter are connected in parallel.

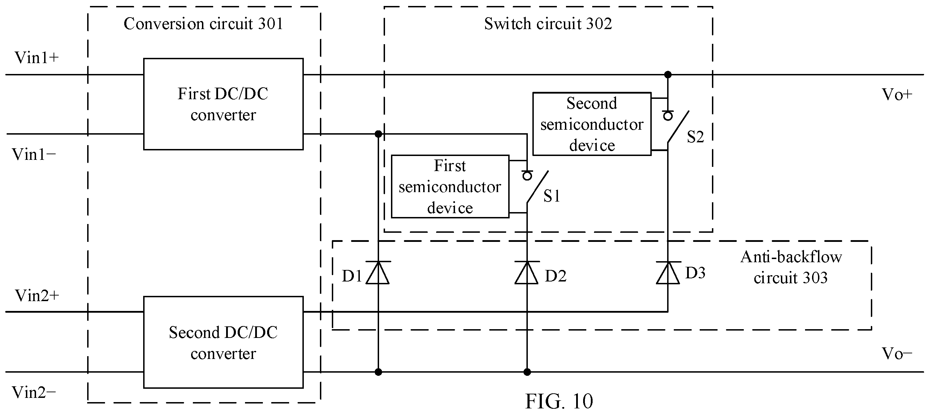

Optionally, S1 may be an alternating current relay switch, and S2 may also be an alternating current relay switch. FIG. 10 is a schematic diagram of a structure of a yet further charging circuit according to an embodiment of this application. The charging circuit shown in FIG. 9 is optimized in FIG. 10. As shown in FIG. 10, when S1 is an alternating current relay switch and S2 is an alternating current relay switch, a switch circuit 302 in the charging circuit may further include a first semiconductor device and a second semiconductor device. S1 and S2 are respectively coupled to the first semiconductor device and the second semiconductor device in parallel; the first semiconductor device is configured to protect S1; and the second semiconductor device is configured to protect S2. A single-point fault occurs because a direct current flows through an alternating current relay. Because the first semiconductor device is coupled to S1 and S2 in parallel, when S1 and S2 are open with a load, S1 and S2 may be prevented from generating an arc and being damaged. The arc may indicate a maximum capability of breaking a current at a limit by the relay switch.

Optionally, the first semiconductor device may be any one of an IGBT, a MOSFET, and an SCR; and the second semiconductor device may also be any one of an IGBT, a rMOSFET, and an SCR.

The charging circuit shown in FIG. 8 may further include a control circuit 304, and the control circuit 304 is coupled to the switch circuit 302.

In FIG. 9 and FIG. 10, the control circuit 304 is specifically coupled to S1 and S2.

The control circuit 304 is configured to: when a first voltage is in a first threshold range, control both S1 and S2 to be open, to connect the first DC/DC converter and the second DC/DC converter in series, and when the first voltage is in a second threshold range, control both S1 and S2 to be closed, to connect the first DC/DC converter and the second DC/DC converter in parallel. For example, when an electric vehicle needs to be charged, the control circuit 304 may first detect or obtain a type of the electric vehicle and a required charging voltage range, and then deliver a signal or a driving signal to the switch circuit 302 based on the charging voltage range, to control the switch circuit 302 (control opening/closing of S1 and S2), to control the conversion circuit 301 (control the first DC/DC converter and the second DC/DC converter to be connected in series/parallel), and implement wide range output. The control circuit 304 may be a circuit that includes an MCU and a driver circuit. For example, the MCU delivers a signal to the drive circuit, and the drive circuit may drive opening/closing of S1 and/or S2.

It can be understood that, in the charging circuits shown in FIG. 9 and FIG. 10, the conversion circuit 301 includes only two groups of DC/DC converters in an example. The conversion circuit 301 may further include a larger quantity of DC/DC converters. The conversion circuit implements a same function. A quantity of DC/DC converters in the conversion circuit 301 is not limited in this embodiment of this application. Similarly, in the charging circuits shown in FIG. 9 and FIG. 10, the anti-backflow circuit 303 includes only three diodes in an example. The anti-backflow circuit 303 may further include a larger quantity of diodes. The anti-backflow circuit implements a same function. A quantity of diodes in the anti-backflow circuit 303 is not limited in this embodiment of this application.

It can be understood that the relay switch in the charging circuits shown in FIG. 4 to FIG. 10 may also be another component that can implement the same function, and the diode may also be another component that can implement the same function. This is not limited in this application.

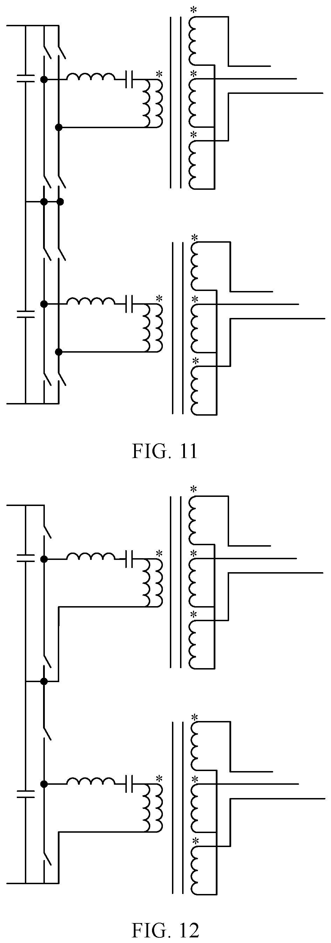

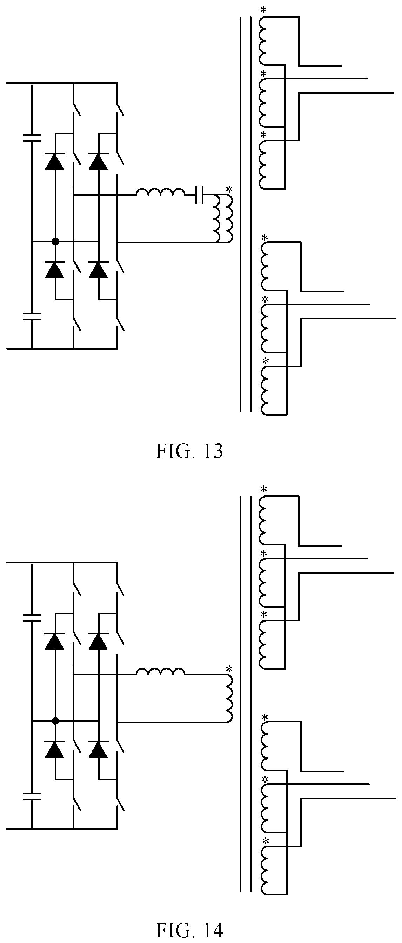

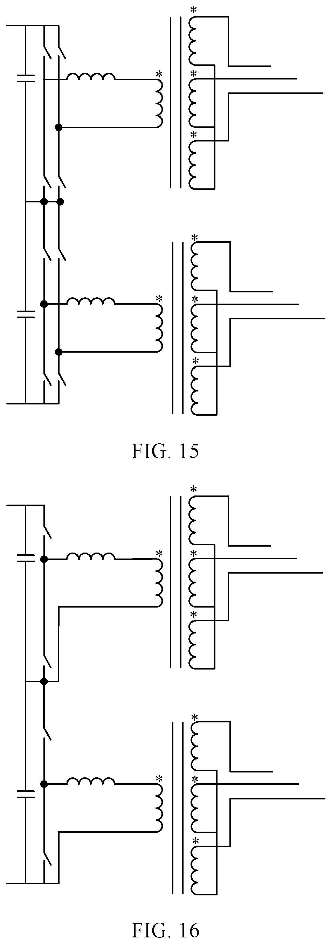

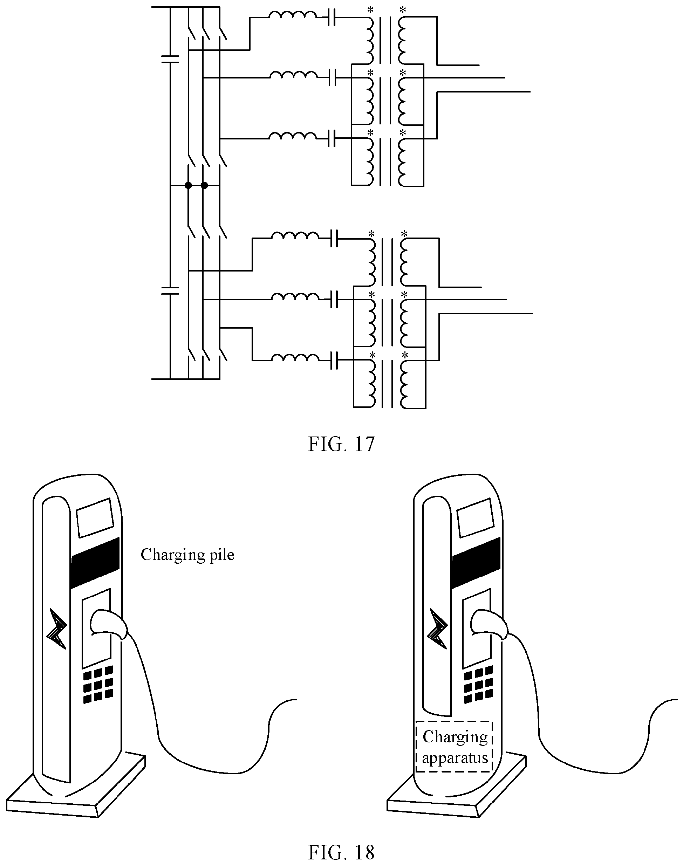

As shown in FIG. 11 to FIG. 17, for a DC/DC converter in any one of the foregoing charging circuits, a converter type of the DC/DC converter is any one of a converter with a full-bridge LLC resonant circuit shown in FIG. 11, a converter with a half-bridge LLC resonant circuit shown in FIG. 12, a converter with a three-level LLC resonant circuit shown in FIG. 13, a converter with a three-level full-bridge circuit shown in FIG. 14, a converter with a phase-shift full-bridge circuit shown in FIG. 15, a converter with an asymmetric half-bridge circuit shown in FIG. 16, and a converter with a three-phase interleaved LLC resonant circuit shown in FIG. 17.

The foregoing describes the charging circuits in embodiments of this application, and the following describes a possible product form to which the charging circuits are applied. It should be understood that any form of product to which the charging circuits in FIG. 3 to FIG. 10 are applied is in the protection scope of this application, which is only defined by the appended claims. It should be further understood that the following description is merely an example, and a product form in this embodiment of this application is not limited thereto.

A charging apparatus is a possible product form. FIG. 18 is a schematic diagram of a charging apparatus according to an embodiment of this application. As shown in FIG. 18, the charging apparatus may be a charging pile, or may be a charging module (model) in the charging pile. A name of the charging module may also be referred to as a power supply apparatus/charging unit (unit)/charger (charger), or the like. The charging module may be obtained by perform combination through insertion/removal, or may be integrated. The charging apparatus may also be applied to an apparatus other than the charging pile.

The objectives, technical solutions, and benefits of this application are further described in detail in the foregoing specific embodiments. It should be understood that the foregoing descriptions are merely specific embodiments of this application, but are not intended to limit the protection scope of this application, which is only defined by the appended claims.

## Claims

1. A charging circuit, comprising at least two groups of direct current DC/DC converters that are mutually coupled, at least one group of relay switches (S1), and at least one diode (D1, D2, D3), wherein
the at least one group of relay switches is configured to connect the at least two groups of DC/DC converters in series when a first voltage is in a first threshold range, wherein the first voltage is a charging voltage of an electric vehicle;
the at least one group of relay switches is further configured to connect the at least two groups of DC/DC converters in parallel when the first voltage is in a second threshold range; and
the at least one diode is configured to prevent a current of a storage battery in the electric vehicle from flowing back;
wherein the charging circuit further comprises a control circuit, and the control circuit is configured to identify a charging voltage range of the electric vehicle through communication, and control closing or opening of the at least one group of relay switches based on the identified charging voltage range of the electric vehicle;
**characterized in that** when the charging circuit comprises two groups of DC/DC converters and two groups of relay switches, the charging circuit comprises a first DC/DC converter, a second DC/DC converter, a first relay switch (S1), a second relay switch (S2), a first diode (D1), a second diode (D2), and a third diode (D3);
a cathode of the first diode (D1) is coupled to a first output end of the first DC/DC converter, an anode of the first diode (D1) is coupled to a first output end of the second DC/DC converter, a cathode of the second diode (D2) is coupled to the first output end of the first DC/DC converter by using the first relay switch (S1), an anode of the second diode (D2) is coupled to a second output end of the second DC/DC converter, a cathode of the third diode (D3) is coupled to a second output end of the first DC/DC converter by using the second relay switch (S2), an anode of the third diode (D3) is coupled to the first output end of the second DC/DC converter, the second output end of the first DC/DC converter is a first output end of the charging circuit, and the second output end of the second DC/DC converter is a second output end of the charging circuit;
the first relay switch (S1) and the second relay switch (S2) are open, so that the first DC/DC converter and the second DC/DC converter are connected in series; and
the first relay switch (S1) and the second relay switch (S2) are closed, so that the first DC/DC converter and the second DC/DC converter are connected in parallel;
wherein the control circuit is further configured to: when the first voltage is in the first threshold range, control the first relay switch and the second relay switch to connect the first DC/DC converter and the second DC/DC converter in series, and when the first voltage is in the second threshold range, control the second relay switch to connect the first DC/DC converter and the second DC/DC converter in parallel.

2. The charging circuit according to claim 1, wherein when the first relay switch is an alternating current relay switch and the second relay switch is an alternating current relay switch, the charging circuit further comprises a first semiconductor device and a second semiconductor device;
the first relay switch and the second relay switch are respectively coupled to the first semiconductor device and the second semiconductor device in parallel;
the first semiconductor device is configured to protect the first relay switch; and
the second semiconductor device is configured to protect the second relay switch.

3. The charging circuit according to claim 2, wherein the first semiconductor device is any one of an insulated gate bipolar transistor IGBT, a metal-oxide-semiconductor MOS field-effect transistor, and a silicon controlled rectifier SCR.

4. The charging circuit according to claim 2, wherein the second semiconductor device is any one of an insulated gate bipolar transistor IGBT, a metal-oxide-semiconductor MOS field-effect transistor, and a silicon controlled rectifier SCR.

5. The charging circuit according to any one of claims 1 to 4, wherein a circuit structure of each of the first DC/DC converter and the second DC/DC converter is any one of the following types:
a full-bridge inductor-inductor-capacitor LLC resonant circuit, a half-bridge LLC resonant circuit, a three-level LLC resonant circuit, a three-level full-bridge circuit, a phase-shift full-bridge circuit, an asymmetric half-bridge circuit, and a three-phase interleaved LLC resonant circuit.

6. A charging apparatus, comprising the charging circuit according to any one of claims 1 to 5.

## Patentansprüche

1. Ladeschaltung, umfassend mindestens zwei Gruppen von Gleichstrom-DC/DC-Wandlern, die miteinander gekoppelt sind, mindestens eine Gruppe von Relaisschaltern (S1) und mindestens eine Diode (D1, D2, D3), wobei
die mindestens eine Gruppe von Relaisschaltern dazu konfiguriert ist, die mindestens zwei Gruppen von DC/DC-Wandlern in Reihe zu schalten, wenn eine erste Spannung in einem ersten Schwellenwertbereich ist, wobei die erste Spannung eine Ladespannung eines Elektrofahrzeugs ist;
die mindestens eine Gruppe von Relaisschaltern ferner dazu konfiguriert ist, die mindestens zwei Gruppen von DC/DC-Wandlern parallel zu schalten, wenn die erste Spannung in einem zweiten Schwellenwertbereich ist; und
die mindestens eine Diode dazu konfiguriert ist, ein Zurückfließen eines Stroms einer Speicherbatterie in dem Elektrofahrzeug zu verhindern;
wobei die Ladeschaltung ferner eine Steuerschaltung umfasst, und die Steuerschaltung dazu konfiguriert ist, einen Ladespannungsbereich des Elektrofahrzeugs durch Kommunikation zu identifizieren und ein Schließen oder Öffnen der mindestens einen Gruppe von Relaisschaltern basierend auf dem identifizierten Ladespannungsbereich des Elektrofahrzeugs zu steuern;
**dadurch gekennzeichnet, dass**, wenn die Ladeschaltung zwei Gruppen von DC/DC-Wandlern und zwei Gruppen von Relaisschaltern umfasst, die Ladeschaltung einen ersten DC/DC-Wandler, einen zweiten DC/DC-Wandler, einen ersten Relaisschalter (S1), einen zweiten Relaisschalter (S2), eine erste Diode (D1), eine zweite Diode (D2) und eine dritte Diode (D3) umfasst;
eine Kathode der ersten Diode (D1) mit einem ersten Ausgabeende des ersten DC/DC-Wandlers gekoppelt ist, eine Anode der ersten Diode (D1) mit einem ersten Ausgabeende des zweiten DC/DC-Wandlers gekoppelt ist, eine Kathode der zweiten Diode (D2) mit dem ersten Ausgabeende des ersten DC/DC-Wandlers mithilfe des ersten Relaisschalters (S1) gekoppelt ist, eine Anode der zweiten Diode (D2) mit einem zweiten Ausgabeende des zweiten DC/DC-Wandlers gekoppelt ist, eine Kathode der dritten Diode (D3) mit einem zweiten Ausgabeende des ersten DC/DC-Wandlers mithilfe des zweiten Relaisschalters (S2) gekoppelt ist, eine Anode der dritten Diode (D3) mit dem ersten Ausgabeende des zweiten DC/DC-Wandlers gekoppelt ist, das zweite Ausgabeende des ersten DC/DC-Wandlers ein erstes Ausgabeende der Ladeschaltung ist und das zweite Ausgabeende des zweiten DC/DC-Wandlers ein zweites Ausgabeende der Ladeschaltung ist;
der erste Relaisschalter (S1) und der zweite Relaisschalter (S2) offen sind, so dass der erste DC/DC-Wandler und der zweite DC/DC-Wandler in Reihe geschaltet sind; und
der erste Relaisschalter (S1) und der zweite Relaisschalter (S2) geschlossen sind, so dass der erste DC/DC-Wandler und der zweite DC/DC-Wandler parallel geschaltet sind;
wobei die Steuerschaltung ferner zu Folgendem konfiguriert ist: wenn die erste Spannung in dem ersten Schwellenwertbereich ist, Steuern des ersten Relaisschalters und des zweiten Relaisschalters, um den ersten DC/DC-Wandler und den zweiten DC/DC-Wandler in Reihe zu schalten, und wenn die erste Spannung in dem zweiten Schwellenwertbereich ist, Steuern des zweiten Relaisschalter, um den ersten DC/DC-Wandler und den zweiten DC/DC-Wandler parallel zu schalten.

2. Ladeschaltung nach Anspruch 1, wobei die Ladeschaltung ferner eine erste Halbleitervorrichtung und eine zweite Halbleitervorrichtung umfasst, wenn der erste Relaisschalter ein Wechselstromrelaisschalter ist und der zweite Relaisschalter ein Wechselstromrelaisschalter ist;
der erste Relaisschalter und der zweite Relaisschalter mit der ersten Halbleitervorrichtung beziehungsweise der zweiten Halbleitervorrichtung parallel gekoppelt sind;
die erste Halbleitervorrichtung dazu konfiguriert ist, den ersten Relaisschalter zu schützen; und
die zweite Halbleitervorrichtung dazu konfiguriert ist, den zweiten Relaisschalter zu schützen.

3. Ladeschaltung nach Anspruch 2, wobei die erste Halbleitervorrichtung ein beliebiger von einem Bipolartransistor mit isolierter Gate-Elektrode, IGBT, einem Metalloxid-Halbleiter-Feldeffekttransistor MOS-Feldeffekttransistor und einem siliziumgesteuerten Gleichrichter, SCR, ist.

4. Ladeschaltung nach Anspruch 2, wobei die zweite Halbleitervorrichtung ein beliebiger von einem Bipolartransistor mit isolierter Gate-Elektrode, IGBT, einem Metalloxid-Halbleiter-Feldeffekttransistor MOS-Feldeffekttransistor und einem siliziumgesteuerten Gleichrichter, SCR, ist.

5. Ladeschaltung nach einem der Ansprüche 1 bis 4, wobei eine Schaltungsstruktur von jedem des ersten DC/DC-Wandlers und des zweiten DC/DC-Wandlers eine beliebige der folgenden Arten ist: eine Vollbrücken-Induktor-Induktor-Kondensator-LLC-Resonanzschaltung, eine Halbbrücken-LLC-Resonanzschaltung, eine Drei-Pegel-LLC-Resonanzschaltung, eine Drei-Pegel-Vollbrücken-Schaltung, eine phasenverschobene Vollbrücken-Schaltung, eine asymmetrische Halbbrücken-Schaltung und eine dreiphasig verschachtelte LLC-Resonanzschaltung.

6. Ladeeinrichtung, umfassend die Ladeschaltung nach einem der Ansprüche 1 bis 5.

## Revendications

1. Circuit de charge, comprenant au moins deux groupes de convertisseurs CC/CC à courant continu qui sont couplés entre eux, au moins un groupe de contacteurs-relais (S1) et au moins une diode (D1, D2, D3), dans lequel
au moins un groupe de contacteurs-relais est configuré pour connecter les au moins deux groupes de convertisseurs CC/CC en série lorsqu'une première tension se trouve dans une première plage seuil, dans lequel la première tension est une tension de charge d'un véhicule électrique ;
l'au moins un groupe de contacteurs-relais est en outre configuré pour connecter les au moins deux groupes de convertisseurs CC/CC en parallèle lorsque la première tension se trouve dans une seconde plage seuil ; et
l'au moins une diode est configurée pour empêcher un courant d'une batterie de stockage du véhicule électrique de refluer ; dans lequel le circuit de charge comprend en outre un circuit de commande, et le circuit de commande est configuré pour identifier une plage de tension de charge du véhicule électrique par communication, et pour commander la fermeture ou l'ouverture de l'au moins un groupe de contacteurs-relais en fonction de la plage de tension de charge identifiée du véhicule électrique ; **caractérisé en ce que** lorsque le circuit de charge comprend deux groupes de convertisseurs CC/CC et deux groupes de contacteurs-relais, le circuit de charge comprend un premier convertisseur CC/CC, un second convertisseur CC/CC, un premier contacteur-relais (S1), un second contacteur-relais (S2), une première diode (D1), une deuxième diode (D2) et une troisième diode (D3) ;
une cathode de la première diode (D1) est couplée à une première extrémité de sortie du premier convertisseur CC/CC, une anode de la première diode (D1) est couplée à une première extrémité de sortie du second convertisseur CC/CC, une cathode de la deuxième diode (D2) est couplée à la première extrémité de sortie du premier convertisseur CC/CC à l'aide du premier contacteur-relais (S1), une anode de la deuxième diode (D2) est couplée à une seconde extrémité de sortie du second convertisseur CC/CC, une cathode de la troisième diode (D3) est couplée à une seconde extrémité de sortie du premier convertisseur CC/CC à l'aide du second contacteur-relais (S2), une anode de la troisième diode (D3) est couplée à la première extrémité de sortie du second convertisseur CC/CC, la seconde extrémité de sortie du premier convertisseur CC/CC est une première extrémité de sortie du circuit de charge, et la seconde extrémité de sortie du second convertisseur CC/CC est une seconde extrémité de sortie du circuit de charge ;
le premier contacteur-relais (S1) et le second contacteur-relais (S2) sont ouverts, de sorte que le premier convertisseur CC/CC et le second convertisseur CC/CC sont connectés en série ; et
le premier contacteur-relais (S1) et le second contacteur-relais (S2) sont fermés, de sorte que le premier convertisseur CC/CC et le second convertisseur CC/CC sont connectés en parallèle ;
dans lequel le circuit de commande est en outre configuré pour : lorsque la première tension se trouve dans la première plage seuil, commander le premier et le second contacteur-relais pour connecter le premier convertisseur CC/CC et le second convertisseur CC/CC en série, et lorsque la première tension se situe dans la seconde plage seuil, commander le second contacteur-relais pour connecter le premier convertisseur CC/CC et le second convertisseur CC/CC en parallèle.

2. Circuit de charge selon la revendication 1, dans lequel, lorsque le premier contacteur-relais est un contacteur-relais à courant alternatif et que le second contacteur-relais est un contacteur-relais à courant alternatif, le circuit de charge comprend en outre un premier dispositif semi-conducteur et un second dispositif semi-conducteur ;
le premier contacteur-relais et le second contacteur-relais sont respectivement couplés au premier dispositif semi-conducteur et au second dispositif semi-conducteur en parallèle ;
le premier dispositif semi-conducteur est configuré pour protéger le premier contacteur-relais ; et
le second dispositif semi-conducteur est configuré pour protéger le second contacteur-relais.

3. Circuit de charge selon la revendication 2, dans lequel le premier dispositif semi-conducteur est l'un quelconque d'un transistor bipolaire à grille isolée IGBT, d'un transistor à effet de champ métal-oxyde-semi-conducteur MOS et d'un redresseur commandé au silicium SCR.

4. Circuit de charge selon la revendication 2, dans lequel le second dispositif semi-conducteur est l'un quelconque d'un transistor bipolaire à grille isolée IGBT, d'un transistor à effet de champ métal-oxyde-semi-conducteur MOS et d'un redresseur commandé au silicium SCR.

5. Circuit de charge selon l'une quelconque des revendications 1 à 4, dans lequel la structure de circuit de chacun du premier convertisseur CC/CC et du second convertisseur CC/CC est l'un quelconque des types suivants :
un circuit résonant LLC à pont complet inductance-inductance-condensateur, un circuit résonant LLC à demi-pont, un circuit résonant LLC à trois niveaux, un circuit à pont complet à trois niveaux, un circuit à pont complet à déphasage, un circuit à demi-pont asymétrique et un circuit résonant LLC triphasé entrelacé.

6. Appareil de charge, comprenant le circuit de charge selon l'une quelconque des revendications 1 à 5.
